# EUROPEAN PATENT APPLICATION

(11) **EP 0 937 553 A1**
(43) Date of publication of application: **25.08.1999**
(21) Application number: 98200542.3
(22) Date of filing: 19.02.1998
(51) Int. Cl.: B27B 5/24

(54) **Bevel table saw.**

(71) Applicant: N.V. Werkhuizen Landuyt, 8000 Brugge (BE)
(72) Inventor: Landuyt, Johan, 8412 Den Haan (BE)
(74) Representative: Leherte, Georges M.L.M., Dr.

(57) **Abstract**

Bevel table saw comprising a table top (4) supported by a frame (9), a blade assembly comprising a saw blade (5) driven by a motor, the saw blade (5) protruding through a saw slot (10) in the table top (4), the blade assembly being pivotable about a pivot axis (1) below the table top (4) parallel the saw slot (10). In order to avoit translational dilocation of the saw blade (5) in the saw slot (10) when varying the bevel angle of the saw blade (5), the invention provides for an automatic and adequate bevel angle dependent translational adjustment of the saw blade (5) with regard to the table top (4) by displacing said pivot axis (1) in a track support unit (3) mounted to the frame (9) and extending substantially perpendicularly to the longitudinal axis of the saw slot (10).

## Description

The invention relates to a bevel table saw comprising a table top supported by a frame, a blade assembly comprising a saw blade driven by a motor, the saw blade protruding through a saw slot in the table top. Such type bevel table saw is on itself known e.g. as type SI 16 sold by SCM. To vary the bevel angle of the saw blade, the blade assembly of this known bevel comprises a carriage slidably based on two circular brackets. The centers of these circular brackets define a pivoting axis for the blade assembly, which in this known bevel table saw coincides with the center longitudinal axis of the saw slot at the surface of the table top. This enables to vary the bevel angle of the saw blade while maintaining its initial center position in the saw slot, wherein the intersection between the plane of the table top with the plane of the saw blade coincides with the center longitudinal axis of the saw slot at the surface of the table top.

However, the construction used is functioning adequately only when the circular brackets and carriage meet narrow tolerance requirements. This means that this known bevel table saw is sensitive to filthiness or corrosion, which may prevent the saw blade from keeping its initial center position in the saw slot when varying the bevel angle.

Bevel table saws are also known, wherein the blade assembly is pivotable about a pivot axis mounted below the table top parallel the saw slot. Such bevel table saw is known e.g. from US patent nr. 4,270,427. This known bevel table saw uses arcuate slots, in which a bevel angle lever is slidably positioned, the bevel angle lever being connected to the blade assembly to vary the bevel angle thereof. Due to the pivot axis lying beneath the surface of the table top, any bevel angle variation will effect translational shift of the saw blade in the plane of the table top and in a direction perpendicular to the longitudinal axis of the saw slot.

It is an object of the invention to provide a bevel table saw, wherein the blade assembly is pivotable about a pivot axis below the table top parallel the saw slot, allowing to vary the bevel angle of the saw blade with automatic compensation of translational displacement of the saw blade when making such adjustment.

It is another object of the invention to provide a bevel table saw with less friction when changing the bevel angle of the saw blade and being less susceptible to wear and corrosion than the above known bevel table saw types.

A bevel table saw comprising a table top supported by a frame, a blade assembly comprising a saw blade driven by a motor, the saw blade protruding through a saw slot in the table top, the blade assembly being pivotable about an pivot axis below the table top parallel the saw slot, according to the invention is therefore characterized by adjustment means for an automatic translational adjustment of the saw blade compensating against dislocation of the saw blade from a center position, wherein the intersection between the plane of the table top with the plane of the saw blade coincides with the center longitudinal axis of the saw slot at the surface of the table top, a swivel defining said pivot axis, being placed in a track support unit connected to the frame and extending substantially perpendicularly to the longitudinal axis of the saw slot - allowing translational displacement of the swivel with regard to the table top, when varying the bevel angle of the saw blade.

By applying the measures according to the invention, the disposition of the saw blade, when varying the bevel angle of the saw blade, is compensated by providing an equal but opposite translational displacement of the swivel with regard to the table top and therewith with regard to the saw slot in a direction perpendicular to the longitudinal axis of the saw slot and parallel to the surface of the table top. This stabilizes the saw blade effectively against any dislocation in said direction, irrespective the angle of the saw blade chosen.

Furthermore, the automatic adjustment according to the invention allows to reduce the width of the saw slot.

Preferably the blade assembly comprises a saw support unit pivotable around the swivel and being provided with a correction cam pressed against a stop pin mounted on the frame, the correction cam being formed to effect translational displacement of the swivel on the track support unit to correct against dislocation of the saw blade, when varying the bevel angle of the saw blade.

Such construction provides less friction when varying the bevel angle of the saw blade and is less susceptible to wear and corrosion than the above known bevel table saw types.

A further preferred embodiment of such bevel table saw according to the invention is characterized in that the radius of the correction cam to the point of contact with the stop pin increases when reducing the bevel angle of the saw blade with respect to the table top.

Another preferred embodiment of a bevel table saw according to the invention is characterized by a spring, connected on the one hand to the frame and on the other hand to the saw support unit effecting contact under pressure between the correction cam and the stop pin.

Preferably, such bevel table saw is characterized in that a stop edge is provided at at least one end of the track support unit to limit the translational displacement of the swivel.

Specific embodiments of the present invention are now described by way of example only, with reference to the accompanying drawings, in which common components have been numbered the same and in which :
Figure 1 is a schematic front view showing the basic principle of the adjustment means of a bevel table saw according to the invention with the saw blade in a first angle position;
Figure 2 is a schematic front view showing the basic principle of the adjustment means of the bevel table saw of Figure 1 with the saw blade in a second angle position;
Figure 3 is more detailed front view of the bevel table saw of Figure 1 with the saw blade shown in the first angle position;
Figure 4 is more detailed front view of the bevel table saw of Figure 1 with the saw blade shown in a second angle position;
Figure 5 is a side view of the bevel table saw of Figure 1 with the saw blade shown in the first angle position.

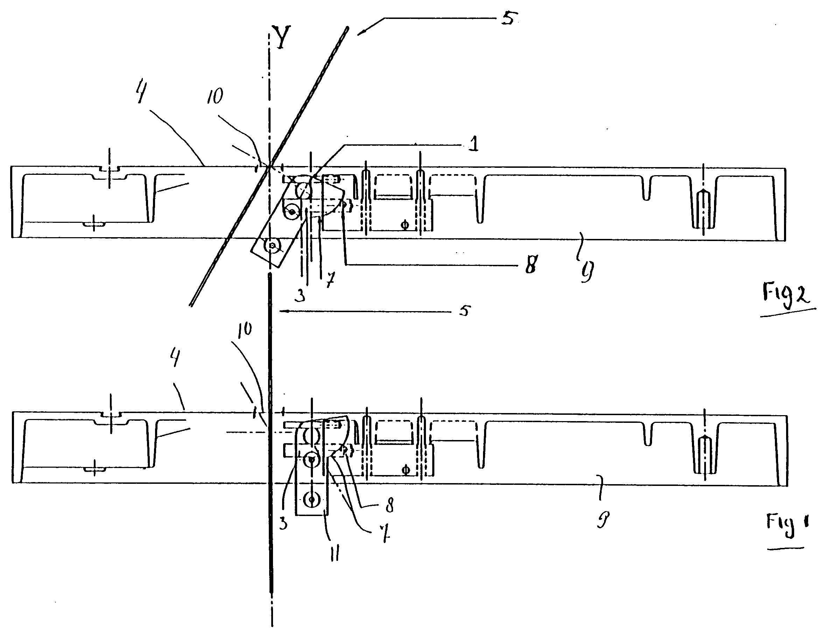

Figure 1 shows the basic principle of a bevel table saw according to the invention comprising a table top 4 supported by a frame 9, a blade assembly comprising a saw blade 5 supported by a saw support unit 11, the saw blade 5 being shown in a first angle position of 90 degree with respect to the surface of the table top 4 and protruding through a saw slot 10 in the table top 4. The blade assembly as a whole, i.e. the structure of the saw blade 5 and the saw support unit 11, is pivotable about the pivot axis of a swivel 1 mounted below the table top 4 parallel the saw slot 10. The bevel table saw comprises adjustment means for an automatic translational adjustment of the saw blade 4 compensating against dislocation of the saw blade 4 from a center position (the centerline of the base position of the saw blad being indicated as Y on figure 1), wherein the intersection between the plane of the table top 4 with the plane of the saw blade 5 coincides with the center longitudinal axis of the saw slot 10 at the surface of the table top 4.

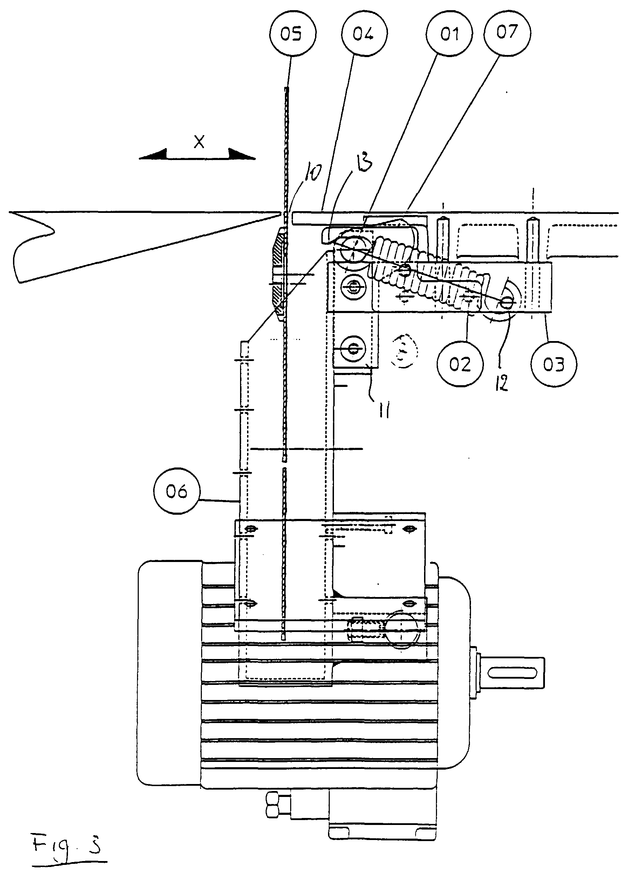

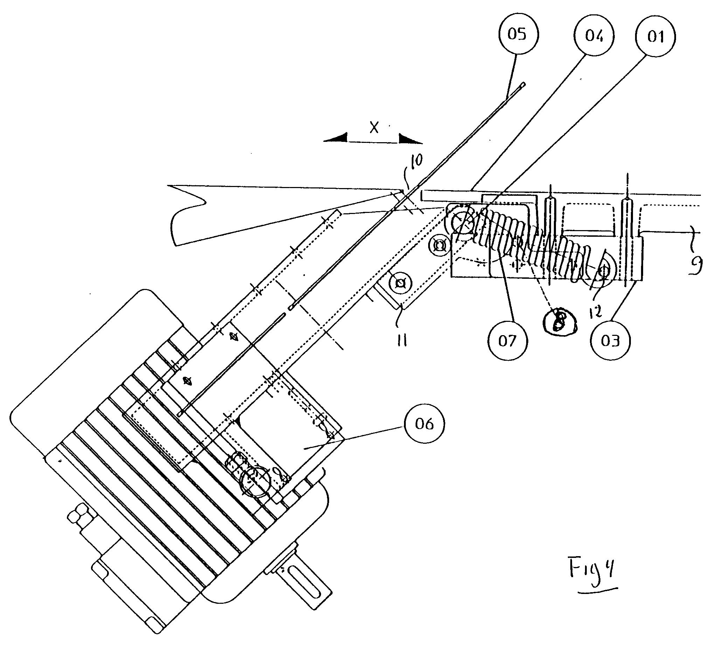

The adjustment means comprises a track support unit 3, which may be formed by e.g. upper and lower guide rails, brackets, layers or by a slot, mounted or placed in a fixed position to the frame 9, extending substantially in a direction perpendicular to the longitudinal axis of the saw slot 10 and parallel the plane of the table top 4. This direction being hereinafter referred to as axial saw direction. (shown ax X on figure 3 and 4)

The track support 3 is receiving the swivel 1, allowing translational displacement of the swivel 1 with regard to the saw slot 10 of the table top 4 in a direction parallel to the axial saw direction. For this, the saw support unit 11 is provided with a correction cam 7 coacting with a stop pin 8 mounted on the frame 9. The correction cam 7 is firmly held against the stop pin 8, having a radius to the point of contact with the stop pin 8, which increases when reducing the bevel angle of the saw blade 4 with respect to the table top 4. In coacting with the stop pin 8 the correction cam 7 effectuates translational displacement of the swivel 1 in the track support unit 3 to correct against dislocation of the saw blade 4 in axial saw direction, when varying the bevel angle of this saw blade 4.

Figure 2 shows the schematic bevel table saw of Figure 1 with the saw blade 4 in a second angle position with regard to the table top 4 of about 60 degree. Due to the bevel angle dependent radius of the correction cam 7, the distance between the pivot axis of the swivel and the point of contact between the coorection cam 7 and the stop pin 8 increases when the bevel angle of the saw blade 5 decreases. This results in an automatic translational adjustment of the swivel 1 and therewith of the saw blade 5 in axial saw direction. The saw blade 5 is therewith prevented from displacement from the center position in the saw slot 10, which would occur when varying the bevel angle of the saw blade 5 without said automatic translational adjustment.

Figure 3 shows a more elaborated front view of the bevel table saw of Figure 1 with the blade assembly comprising a motor for driving the saw blade 5, said motor, saw blade and blade support unit 11 being mutually fixed by means of an mounting strucure 6, the saw blade 5 being set in said first angle position of 90 degree. The bevel table saw comprises a spring 2 being stretched between a fixing joint 12 mounted on the track support unit 3 and the swivel 1, therewith pressing the swivel 1 through its correction cam 7 against the stop pin 8.

Furthermore a stop edge 13 is provided at the end of the track support unit 3 opposite to the stop pin 8 to limit the translational displacement of the swivel 1, therewith defining the lower limit of the range, in which the bevel angle of the saw blade 5 can be varied.

Figure 4 shows the bevel table saw of Figure 3 with the saw blade 5 set at the smallest bevel angle (about 40 degree). In this lower limit angle position the swivel 1 is blocked by the stop edge 13.

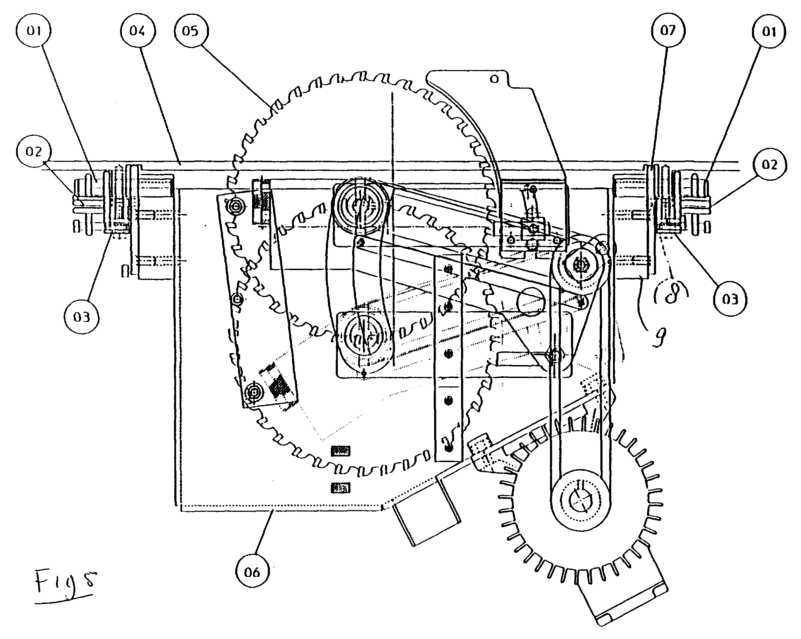

Figure 5 is a side view of the bevel table saw of Figure 1 with the saw blade shown in the first angle position.

## Claims

1. Bevel table saw comprising a table top supported by a frame, a blade assembly comprising a saw blade driven by a motor, the saw blade protruding through a saw slot in the table top, the blade assembly being pivotable about a pivot axis below the table top parallel the saw slot, **characterized by** adjustment means for an automatic translational adjustment of the saw blade compensating against dislocation of the saw blade from a center position, wherein the intersection between the plane of the table top with the plane of the saw blade coincides with the center longitudinal axis of the saw slot at the surface of the table top, a swivel defining said pivot axis being slidably placed in a track support unit mounted to the frame and extending substantially perpendicularly to the longitudinal axis of the saw slot allowing translational displacement of the pivot axis with regard to the table top, when varying the bevel angle of the saw blade.

2. Bevel table saw according to claim 1, **characterized in that** the blade assembly comprises a saw support unit pivotable around the swivel and being provided with a correction cam pressed against a stop pin mounted on the frame, the correction cam being formed to effect translational displacement of the swivel in the track support unit to correct against dislocation of the saw blade, when varying the bevel angle of the saw blade.

3. Bevel table saw according to claim 2, **characterized in that** the radius of the correction cam to the point of contact with the stop pin increases when reducing the bevel angle of the saw blade with respect to the table top.

4. Bevel table saw according to claim 1, 2 or 3, **characterized by** a spring, connected on the one hand to the frame and on the other hand to the saw support unit effecting contact under pressure between the correction cam and the stop pin.

5. Bevel table saw according to claim 1, 2, 3, or 4, **characterized in** that a stop edge is provided at at least one end of the track support unit to limit the translational displacement of the swivel.
